# EUROPÄISCHE PATENTSCHRIFT

(11) **EP 0 717 674 B1**
(45) Veröffentlichungstag und Bekanntmachung des Hinweises auf die Patenterteilung: **16.07.1997**
(21) Anmeldenummer: 93919314.0
(22) Anmeldetag: 10.09.1993
(51) Int. Cl.: B29C 45/64, B29C 33/20

(54) **HOLMLOSE KUNSTSTOFF-SPRITZGIESSMASCHINE**
PLASTIC INJECTION MOULDING MACHINE WITHOUT TRAVERSES
MACHINE DE MOULAGE PAR INJECTION DE MATIERES PLASTIQUES DEPOURVUE DE TRAVERSES

(43) Veröffentlichungstag der Anmeldung: 26.06.1996
(73) Patentinhaber: Battenfeld Kunststoffmaschinen Ges.m.b.H., A-2542 Kottingbrunn (AT)
(72) Erfinder: MÜSSLER, Richard, A-7035 Steinbrunn (AT); BLEIER, Harald, A-2700 Wr. Neustadt (AT)
(74) Vertreter: Müller, Gerd, Dipl.-Ing.
(86) Internationale Anmeldenummer: EP9302447
(87) Internationale Veröffentlichungsnummer: WO9507171

(56) Entgegenhaltungen:
- EP-A- 0 311 133
- EP-A- 0 554 068
- DE-A- 1 529 976
- DE-A- 2 129 382
- DE-A- 2 321 694
- US-A- 3 734 671
- US-A- 4 878 828
- Patent Abstracts of Japan, Band 13, Nr 33(M-789); & JP,A,63242622 (MITSUBISHI HEAVY IND LTD), 1988-10-07

## Beschreibung

Die Erfindung betrifft eine Kunststoff-Spritzgießmaschine mit einer holmlosen Formschließeinheit, bei der die Düsen- und die bewegliche Schließplatte in einem insbesondere C-förmigen Maschinenrahmen angeordnet sind.

Holmlose Spritzgießmaschinen dieser Art sind bekannt (vgl. z.B. Battenfeld-Firmen-Druckschrift "87 Battenfeld Austria", Seiten 44/45). Sie sind, insbesondere bei großen Maschinen, erwünscht, um die Formen mittels Hebezeugen aus- und einbauen zu können. Somit liegt keine den Ausbau störende obere Traverse des Ständers vor, der vielmehr als ein nach oben offener Rahmen ausgebildet ist. Problematisch ist bei der beschriebenen Bauweise, daß ein holmloser Rahmen durch die relativ hohen Schließdrücke wesentlich mehr verformt wird als bei einer geschlossenen Bauweise des Maschinenrahmens. Es läßt sich daher nicht verhindern, daß der - bei einem C-förmigen Maschinenrahmen - bzw. die - bei einem U-förmigen Maschinenrahmen - freien Schenkel nach außen ausweichen.

Um diesen Verformungen entgegenzuwirken und eine Parallelität der feststehenden Düsen- und der beweglichen Schließplatte zu gewährleisten, sind Schließsysteme bekannt, die mittels einstellbarer Federkräfte die Schließplatte in unbelastetem Zustand parallel zur Düsenkante halten. Da unterschiedliche Werkzeuggewichte die Plattenparallelität beeinflussen, ist es notwendig, die Federn werkzeugspezifisch einzustellen. Das aber führt wiederum zu erhöhten Rüstkosten bzw. macht einen automatischen Werkzeugwechsel nur bedingt möglich. Durch die EP-A-0 554 068 ist es bekanntgeworden, die bewegliche Schließplatte auf Längsführungen anzuordnen, die einen integralen Bestandteil des Maschinen-Grundrahmens darstellen.

Der Erfindung liegt daher die Aufgabe zugrunde, eine Kunststoff-Spritzgießmaschine der eingangs genannten Art mit einem verbesserten Plattenparallelitätssystem zu schaffen, das es erlaubt, die beim Aufbringen die Schließkraft auftretende Verformung als Einflußgröße auszuschalten.

Diese Aufgabe wird erfindungsgemäß dadurch gelöst, daß der Maschinenrahmen mit einem freikragenden, aktiven Ausgleichselement versehen ist, das die Führung für die Schließplatte aufweist.

Der Begriff "aktiv" steht hierbei für die Funktion, daß der Parallelitätsausgleich zwischen Düsen- und Schließplatte unabhängig von der Schließkraft und der daraus resultierenden Verformung immer durch das Ausgleichselement gewährleistet ist. Es liegt somit eine völlig neue Bauweise einer Kunststoff-Spritzgießmaschine vor. Diese weist nämlich ein freikragendes Ausgleichselement, das sich vorteilhaft als im wesentlichen L-förmiger Tragwinkel ausbilden läßt, zur Aufnahme sowohl der beweglichen Schließplatte als auch der mit dem Ausgleichselement vorzugsweise fest verbundenen Düsenplatte auf. Eine von den Schließkräften verursachte Verlagerung der Platten gleicht sich selbsttätig, das heißt mit dem Grad der Verformung einhergehend aus. Denn unabhängig davon, wieviel Schließkraft aufgebracht wird, stellt sich, ohne daß dabei nachteilige Reibungskräfte zwischen dem Ausgleichselement und dem Maschinenrahmen auftreten können, bei einer schließkraftbedingten Schiefstellung der Düsenplatte die gewünschte und erforderliche Parallelität der Platten aufgrund der Anordnung von Düsen- und Schließplatte gemeinsam auf dem freikragenden Ausgleichselement bzw. Träger ein. Die Verformung als Einflußgröße der Spritzgießmaschine läßt sich damit völlig ausschalten. Das erlaubt es, mit kleinstmöglichem Materialeinsatz bei der Dimensionierung der Maschineneinheit auszukommen, woraus sich ein deutlicher Kostenvorteil gegenüber bekannten Systemen ergibt.

Es wird vorgeschlagen, daß das Ausgleichselement bzw. der L-förmige Tragwinkel im Stützbereich der Düsenplatte fest mit dem Maschinenrahmen verbunden ist. Es kann somit sowohl mit dem Maschinenrahmen als auch mit der Düsenplatte in fester Verbindung stehen, was die Versteifung der Formenschließeinheit begünstigt.

Nach einer Ausgestaltung der Erfindung wird vorgeschlagen, daß das Ausgleichselement mit einem Wegmeßgerät versehen ist. Dieses läßt sich vorteilhaft am freien Ende des Ausgleichselements gegenüberliegend von einem Sensor im Maschinenrahmen anordnen. Mit dem auf diese Weise erreichten Wegmeßsystem läßt sich die Verformung messen und ausgehend von dieser die jeweilige Schließkraft ermitteln, da das Sensorsystem die schließkraftbedingten Längenänderungen erkennt.

Eine Ausgestaltung der Erfindung sieht vor, daß die Schließplatte an ein außerdem an eine Lagerplatte angelenktes Kniehebelsystem angeschlossen ist. Das somit zur Bewegung und Krafterzeugung eingesetzte Kniehebelsystem läßt sich hydraulisch, elektrisch oder als Kombinationssystem, d.h. elektro-hydraulisch, antreiben. Alternativ ließe sich ein gelenkig mit dem Maschinenrahmen und der Schließplatte verbundener Hydraulikzylinder oder ein gelenkig mit dem Maschinenrahmen und der Schließplatte verbundener, eine Spindel-Mutter-Kombination aufweisender Elektroantrieb einsetzen.

Es empfiehlt sich, die Lagerplatte vertikal verstellbar auszubilden. Somit ist eine Formhöheneinstellung gewährleistet, die sich hydraulisch, elektrisch oder elektro-mechanisch durchführen läßt. Die Verstellung der Lagerplatte in vertikaler Richtung kann durch ein Wegmeßsystem ausgelöst werden, das die Verformung des C- bzw. Maschinenrahmens gegenüber dem Ausgleichsmoment mißt. Dadurch kann mit Hilfe einer Regelung, die die Abhängigkeit zwischen Ausgleichselement und vertikaler Lagerplatte ausnützt, eine Optimierung des Kraftflusses erfolgen.

Weitere Merkmale und Vorteile der Erfindung ergeben sich aus den Ansprüchen und der nachfolgenden Beschreibung, in der ein in den Zeichnungen dargestelltes Ausführungsbeispiel des Gegenstandes der Erfindung näher erläutert ist. Es zeigen:

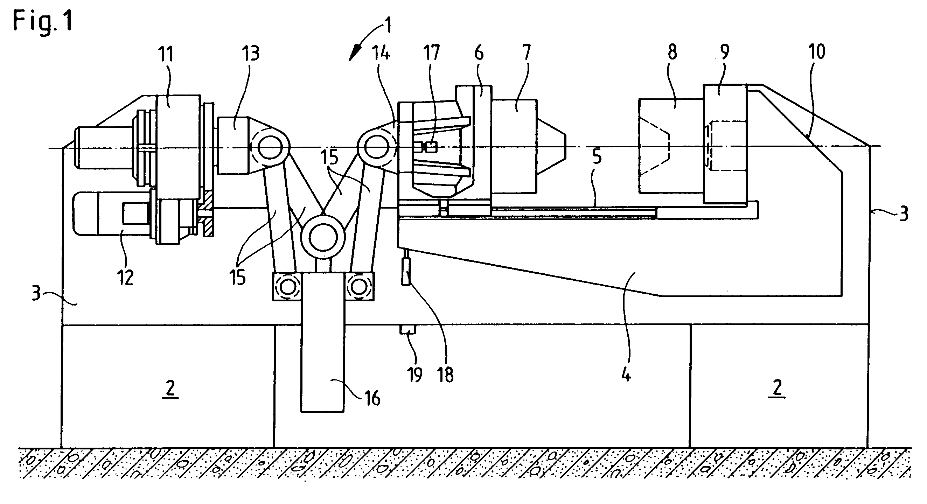

- Figur 1: eine Längsansicht einer erfindungsgemäßen Kunststoff-Spritzgießmaschine, und
- Figur 2: die Spritzgießmaschine gemäß Fig. 1 bei aufgebrachter Schließkraft der Formschließeinheit.

Eine Spritzgießmaschine 1 weist einen über Ständerbeine 2 auf dem Boden abgestützten, C-förmigen Maschinenrahmen 3 auf. In dem Maschinenrahmen 3 ist ein als L-förmiger Tragwinkel 4 ausgebildetes, freikragendes Ausgleichselement angeordnet, das mit einer Führung 5 für eine darauf hin- und herbewegliche Schließplatte 6 versehen ist. Diese weist eine erste Werkzeughälfte 7 auf, und die zweite Werkzeughälfte 8 befindet sich an einer Düsenplatte 9, die fest mit dem Ausgleichselement bzw. Tragwinkel 4 verbunden ist. Weiterhin ist der Tragwinkel 4 im Stützbereich 10 der Düsenplatte 9 fest mit dem Maschinenrahmen 3 verbunden.

An der dem freien Ende des Tragwinkels 4 gegenüberliegenden Seite der Kunststoff-Spritzgießmaschine 1 ist in dem Maschinenrahmen 3 eine Lagerplatte 11 angeordnet, der eine Formhöhenverstellungseinrichtung 12 zugeordnet ist, mit der sich die Lagerplatte 11 vertikal verstellen läßt. Einerseits an einen Flansch 13 der Lagerplatte 11 und andererseits einen Flansch 14 der Schließplatte 6 ist zur Bewegung der Schließplatte 6 und zum Schließkraftaufbau ein Kniehebelsystem 15 angelenkt, das von einem Stellglied bzw. Bewegungsmechanismus 16 beaufschlagbar ist. Eine im Bereich der Schließplatte 6 vorgesehene Auswerfereinheit 17 stößt die fertiggestellten, spritzgegossenen Gegenstände aus. An der Unterseite des freien Endes des Tragwinkels 4 ist ein Wegmeßgerät 18 angeordnet, dem ein Sensor 19 im Maschinenrahmen 3 gegenüberliegt, so daß ein Wegmeßsystem vorliegt, mit dem sich aufgrund der Wegänderung die Schließkraft ermitteln läßt.

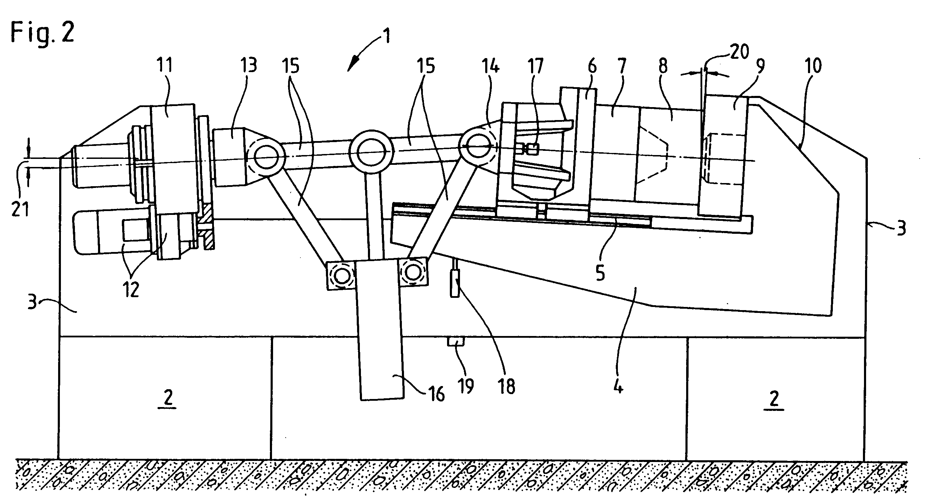

Die im Betrieb geschlossene Formschließeinheit der Spritzgießmaschine 1 ist in Fig. 2 dargestellt. Das von dem Bewegungsmechanismus 16 beaufschlagte Kniehebelsystem 15 hat die bewegliche Schließplatte 6 auf der Führung 5 des Tragwinkels 4 in die Schließposition bewegt, in der die Werkzeughälften 7, 8 von der über das Kniehebelsystem 15 aufgebrachten Schließkraft in geschlossener Lage gehalten werden. Die durch die Verformung unter der Schließkraft auftretende Parallelitätsabweichung 20 zwischen den die Werkzeughälften 7, 8 tragenden Platten 6 bzw. 9 wird dabei aufgrund des freitragenden, aktiven Tragwinkels 4 selbsttätig ausgeglichen, da sich das freie Ende des Tragwinkels 4 entsprechend weiter nach oben verlagert. Dieser selbsttätige Ausgleich und das Herstellen bzw. Aufrechterhaltung der Parallelität von Schließ- und Düsenplatte 6, 9 findet somit bei jedweder auftretenden Schließkraft statt, so daß die schließkraftbedingte Verformung als Einflußgröße für den Betrieb der Spritzgießmaschine 1 eliminiert wird. Einhergehend mit der sich bezogen auf den Maschinenrahmen 3 verändernden Höhenlage des freien Endes des Tragwinkels 4 wird mittels der Formhöhenverstelleinrichtung 12 die Lagerplatte 11 um das entsprechende Verstellmaß 21 vertikal nach oben bewegt.

## Patentansprüche

1. Kunststoff-Spritzgießmaschine mit einer holmlosen Formschließeinheit, bei der die Düsen- und die bewegliche Schließplatte in einem insbesondere C-förmigen Maschinenrahmen angeordnet sind,
**dadurch gekennzeichnet,**
daß die Schließplatte (6) auf einem freikragend im Maschinenrahmen (3) angeordneten, die Parallelität zwischen der Düsen- und der Schließplatte (9, 6) bei schließkraftbedingten Schiefstellungen aufrechterhaltenden Ausgleichselement in Form eines Trägers (4) geführt ist.

2. Spritzgießmaschine nach Anspruch 1,
**dadurch gekennzeichnet,**
daß das Ausgleichselement als im wesentlichen L-förmiger Tragwinkel (4) ausgebildet ist.

3. Spritzgießmaschine nach Anspruch 1 oder 2,
**dadurch gekennzeichnet,**
daß das Ausgleichselement (4) und die Düsenplatte (9) fest miteinander verbunden sind.

4. Spritzgießmaschine nach einem oder mehreren der Ansprüche 1 bis 3,
**dadurch gekennzeichnet,**
daß das Ausgleichselement (4) im Stützbereich (10) der Düsenplatte (9) fest mit dem Maschinenrahmen (3) verbunden ist.

5. Spritzgießmaschine nach einem oder mehreren der Ansprüche 1 bis 4,
**dadurch gekennzeichnet,**
daß das Ausgleichselement (4) mit einem Wegmeßgerät (18) versehen ist.

6. Spritzgießmaschine nach Anspruch 5,
**dadurch gekennzeichnet,**
daß das Wegmeßgerät (18) am freien Ende des Ausgleichselements (4) und mindestens ein korrespondierender Sensor (19) im Maschinenrahmen (3) angeordnet ist.

7. Spritzgießmaschine nach einem oder mehreren der Ansprüche 1 bis 6,
**dadurch gekennzeichnet,**
daß die Schließplatte (6) an ein außerdem an eine Lagerplatte (11) angelenktes Kniehebelsystem (15) angeschlossen ist.

8. Spritzgießmaschine nach Anspruch 7,
**dadurch gekennzeichnet,**
daß die Lagerplatte (11) vertikal verstellbar ist.

## Claims

1. Synthetic material injection moulding machine with a mould closing unit without traverses, in which the nozzle plate and the movable closure plate are arranged in a, in particular, C-shaped machine frame, characterised thereby that the closure plate (6) is guided on a compensating element, which is arranged in cantilever manner in the machine frame (3) and maintains parallelism between the nozzle and closure plates (6, 9) in skew settings caused by the closing force, in the form of a carrier (4).

2. Injection moulding machine according to claim 1, characterised thereby that the compensating element is constructed as a substantially L-shaped support bracket (4).

3. Injection moulding machine according to claim 1 or 2, characterised thereby that the balancing element (4) and the nozzle plate (9) are firmly connected together.

4. Injection moulding machine according to one or more of claims 1 to 3, characterised thereby that the compensating element (4) is firmly connected with the machine frame (3) in the support region (10) of the nozzle plate (9).

5. Injection moulding machine according to one or more of claims 1 to 4, characterised thereby that the compensating element (4) is provided with a travel measuring apparatus (18).

6. Injection moulding machine according to claim 5, characterised thereby that the travel measuring apparatus (18) is arranged at the free end of the compensating element (4) and at least one corresponding sensor (19) is arranged in the machine frame (3).

7. Injection moulding machine according to one or more of claims 1 to 6, characterised thereby that the closure plate (6) is connected to a toggle joint system (15) pivotably connected at the outside to a bearing plate (11).

8. Injection moulding machine according to claim 7, characterised thereby that the bearing plate (11) is vertically adjustable.

## Revendications

1. Presse d'injection pour matières synthétiques, comportant une unité de fermeture des moules sans longeron, dans laquelle le plateau frontal et le plateau de fermeture mobile sont disposés dans un cadre de machine ayant en particulier une forme de C, caractérisée en ce que le plateau frontal (6) est guidé sur un élément de compensation qui a la forme d'un support (4) disposé de manière faire saillie librement dans le cadre (3) de la machine et qui maintient le parallélisme entre le plateau frontal et le plateau de fermeture (9, 6) lors de positions inclinées provoquées par les forces de fermeture.

2. Presse d'injection selon la revendication 1, caractérisée en ce que l'élément de compensation est réalisé sous forme d'une équerre de support (4) en forme de L.

3. Presse d'injection selon la revendication 1 ou 2, caractérisée en ce que l'élément de compensation (4) et le plateau frontal (9) sont reliés l'un à l'autre de manière fixe.

4. Presse d'injection selon une ou plusieurs des revendications 1 à 3, caractérisée en ce que l'élément de compensation (4) est relié, au niveau de la zone d'appui (10) du plateau frontal (9), de manière fixe au cadre (3) de la presse.

5. Presse d'injection selon une ou plusieurs des revendications 1 à 4, caractérisée en ce que l'élément de compensation (4) est équipé d'un appareil de mesure du parcours (18).

6. Presse d'injection selon la revendication 5, caractérisée en ce que l'appareil de mesure du parcours (18) est disposé au niveau de l'extrémité libre de l'élément de compensation (4) et comporte au moins un capteur (19) correspondant situé dans le cadre (3) de la presse.

7. Presse d'injection selon une ou plusieurs des revendications 1 à 6, caractérisée en ce que le plateau frontal (6) est relié à un système à genouillère (15) qui est d'autre part relié de manière articulée à une plaque d'appui (11).

8. Presse d'injection selon la revendication 7, caractérisée en ce que la plaque d'appui (11) peut être déplacée verticalement.
